(19) Europäisches Patentamt
European Patent Office
Office européen des brevets

(11) **EP 4 759 616 A1**

(12) **EUROPEAN PATENT APPLICATION**
published in accordance with Art. 153(4) EPC

(43) Date of publication:
**17.06.2026 Bulletin 2026/25**

(21) Application number: **24851776.5**

(22) Date of filing: **02.08.2024**

(51) International Patent Classification (IPC):
**B60L 15/20** *(2006.01)*    **B60W 30/00** *(2006.01)*

(52) Cooperative Patent Classification (CPC):
**B60L 15/20; B60W 30/00**

(86) International application number:
**PCT/JP2024/027745**

(87) International publication number:
**WO 2025/033351 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.08.2023 JP 2023130617**

(71) Applicants:
• **Mitsubishi Jidosha Kogyo Kabushiki Kaisha
Tokyo 108-8410 (JP)**
• **The University of Tokyo
Bunkyo-ku, Tokyo 113-8654 (JP)**

(72) Inventors:
• **TAKAHASHI, Ryota
Tokyo 108-8410 (JP)**
• **FUJIMOTO, Hiroshi
Tokyo 113-8654 (JP)**
• **FUSE, Hiroyuki
Tokyo 113-8654 (JP)**
• **TAKAHASHI, Naoki
Tokyo 108-8410 (JP)**
• **OKAMURA, Yutaro
Tokyo 108-8410 (JP)**
• **ISHIHARA, Yuji
Tokyo 108-8410 (JP)**

(74) Representative: **Vossius & Partner
Patentanwälte Rechtsanwälte mbB
Siebertstraße 3
81675 München (DE)**

(54) **VEHICLE CONTROL DEVICE AND VEHICLE CONTROL METHOD**

(57)     A disclosed vehicle control device (10) includes a sum model (M1) that is obtained by modeling motion states of a left drive system and a right drive system during straight traveling, a difference model (M2) that is obtained by modeling motion states of the left drive system and the right drive system during turning, a calculation unit (11), a limiting unit (12), and a control unit (13). The calculation unit (11) calculates a sum mode target slip ratio ($y_S$) and a difference mode target slip ratio ($y_D$). The limiting unit (12) limits the sum mode target slip ratio ($y_S$) and the difference mode target slip ratio ($y_D$) by upper and lower limit values. The control unit (13) controls driving forces of the left drive system and the right drive system, based on the limited sum mode target slip ratio ($y_S$) and difference mode target slip ratio ($y_D$), the sum model (M1), and the difference model (M2). The upper and lower limit values of the sum mode target slip ratio ($y_S$) are variably set.

Fig. 1

## Description

[Technical Field]

The present invention relates to a vehicle control device and a vehicle control method related to driving force control of a vehicle.

[Background Art]

In the related art, in a vehicle including a mechanism capable of adjusting driving forces of left and right wheels, there is known a vehicle that controls the driving forces so as to curb torsional vibration of the left and right wheels (see PTL 1). In addition, there is also known a device that sets target slip ratios of the left and right wheels and controls the driving forces of the left and right wheels so that the actual slip ratios are the target slip ratios (see PTL 2).

[Citation List]

[Patent Literature]

[PTL 1]
JP 2019-103249 A
[PTL 2]
WO 2023/013565 A1

[Summary of Invention]

[Technical Problem]

As the value of a target slip ratio is set to be larger, the actual slip ratio increases, and a driving force transmitted to a road surface decreases. Thus, in order to enhance the traveling stability of the vehicle, it is desirable to set the target slip ratio to be small to some extent. On the other hand, depending on a traveling state of the vehicle, it may be desired to rapidly change the posture (orientation in a yaw direction, traveling direction) of the vehicle by intentionally steering the wheels while slipping during turning and adjusting a balance between a longitudinal force and a lateral force of the wheels. In the driving force control of the related art, there is a problem that it is difficult to adjust the balance between the longitudinal force and the lateral force of the wheels.

An object of the present invention is to provide a vehicle control device and a vehicle control method which are created in view of the above problems and capable of improving controllability regarding a balance between a longitudinal force and a lateral force of wheels. Note that, in addition to this object, other objects of the present invention involve achieving operations and effects derived from configurations described in "Description of Embodiments" to be described later, which cannot be obtained by techniques in the related art.

[Solution to Problem]

The disclosed invention can be realized as aspects (application examples) to be disclosed below, and solves at least a part of the above problems. Second and subsequent aspects are all aspects that can be additionally selected as appropriate, and are all aspects that can be omitted. None of the second and subsequent aspects discloses an aspect or configuration that is essential to the present invention.

Aspect 1. A vehicle control device according to the present disclosure is a vehicle control device that controls driving forces of a left drive system and a right drive system in a vehicle including the left drive system including a left axle and a left wheel to which power is transmitted from a left drive source, and the right drive system including a right axle and a right wheel to which power is transmitted from a right drive source. The vehicle control device includes a sum model that is obtained by modeling motion states of the left drive system and the right drive system during straight traveling, and a difference model that is obtained by modeling motion states of the left drive system and the right drive system during turning.

The vehicle control device includes a calculation unit that calculates a sum mode target slip ratio equivalent to a sum of target values of slip ratios of the left wheel and the right wheel and a difference mode target slip ratio equivalent to a difference between the target values of the slip ratios, a limiting unit that limits the sum mode target slip ratio and the difference mode target slip ratio with an upper limit value and a lower limit value of each of the ratios, and a control unit that controls the driving forces of the left drive system and the right drive system based on the sum mode target slip ratio and the difference mode target slip ratio, which are limited by the limiting unit, and the sum model and the difference model. The upper limit value and the lower limit value of the sum mode target slip ratio are variably set.

Aspect 2. In an aspect including the above-described aspect 1, it is preferable that the upper limit value and the lower limit value of the sum mode target slip ratio are changed depending on a parameter related to a driver's operation input.

Aspect 3. In an aspect including the above-described aspect 1, it is preferable that the upper limit value and the lower limit value of the sum mode target slip ratio are changed depending on a parameter related to a traveling state of the vehicle.

Aspect 4. In an aspect including the above-described aspect 1, it is preferable that the upper limit value and the lower limit value of the difference mode target slip ratio are variably set.

Aspect 5. In an aspect including the above-described aspect 4, it is preferable that the upper limit value and the lower limit value of the difference mode target slip ratio are changed depending on a parameter related to a driver's operation input.

Aspect 6. In an aspect including the above-described aspect 4, it is preferable that the upper limit value and the lower limit value of the difference mode target slip ratio are changed depending on a parameter related to a traveling state of the vehicle.

Aspect 7. A vehicle control method according to the present disclosure is a vehicle control method of controlling driving forces of a left drive system and a right drive system in a vehicle including the left drive system including a left axle and a left wheel to which power is transmitted from a left drive source, and the right drive system including a right axle and a right wheel to which power is transmitted from a right drive source. First, the vehicle control method includes preparing a sum model that is obtained by modeling motion states of the left drive system and the right drive system during straight traveling, and a difference model that is obtained by modeling motion states of the left drive system and the right drive system during turning.

The vehicle control method includes calculating a sum mode target slip ratio equivalent to a sum of target values of slip ratios of the left wheel and the right wheel, and a difference mode target slip ratio equivalent to a difference between the target values of the slip ratios. Subsequently, the vehicle control method includes limiting the sum mode target slip ratio and the difference mode target slip ratio with an upper limit value and a lower limit value of each of the ratios, and controlling the driving forces of the left drive system and the right drive system based on the sum mode target slip ratio and the difference mode target slip ratio, which are limited by the limiting unit, and the sum model and the difference model. The upper limit value and the lower limit value of the sum mode target slip ratio are variably set.

[Advantageous Effects of Invention]

According to the disclosed vehicle control device and vehicle control method, an upper limit value and a lower limit value of a sum mode target slip ratio are set to be variable, and thus it is possible to comprehensively change target slip ratios of left and right wheels and improve controllability regarding a balance between a longitudinal force and a lateral force of the wheels.

[Brief Description of Drawings]

[Fig. 1]

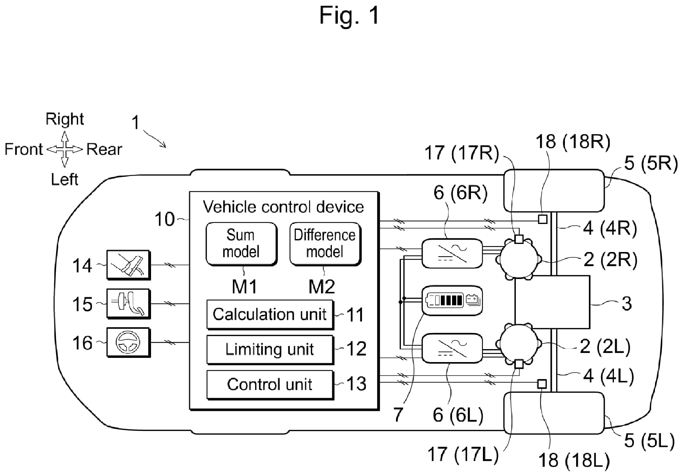

Fig. 1 is a block diagram of a vehicle to which a vehicle control device is applied.
[Fig. 2]

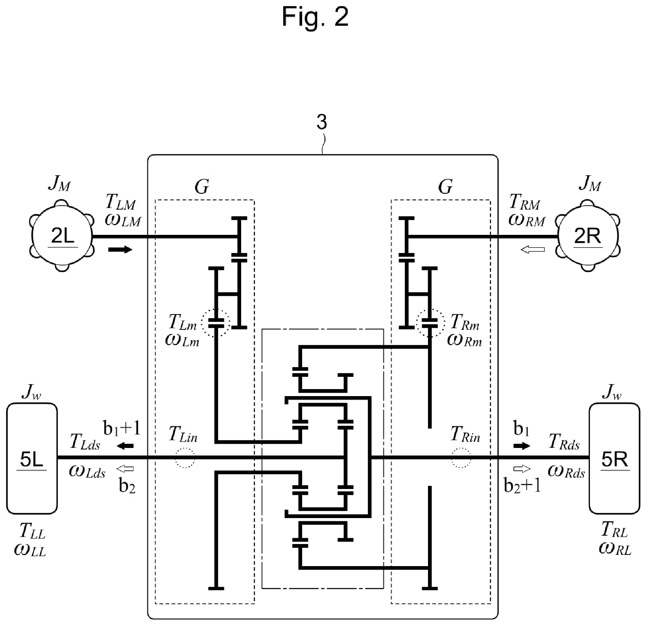

Fig. 2 is a schematic view illustrating an example of a structure of a drive system of a vehicle.
[Fig. 3]

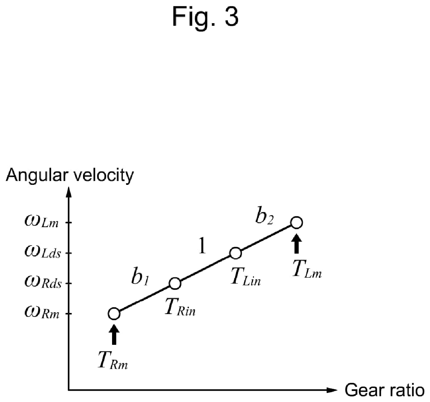

Fig. 3 is a speed diagram of a power distribution mechanism of a vehicle having the structure of Fig. 2.
[Fig. 4]

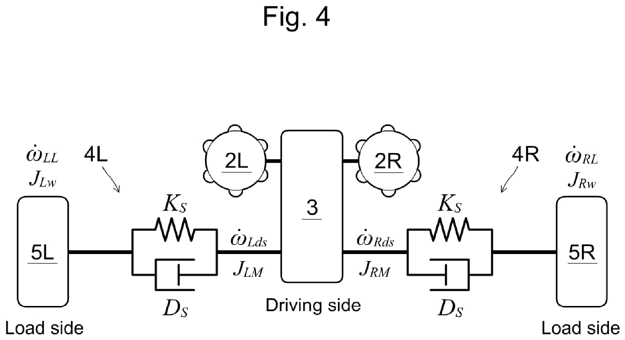

Fig. 4 is a schematic diagram illustrating structures of a left drive system and a right drive system of a vehicle.
[Fig. 5]

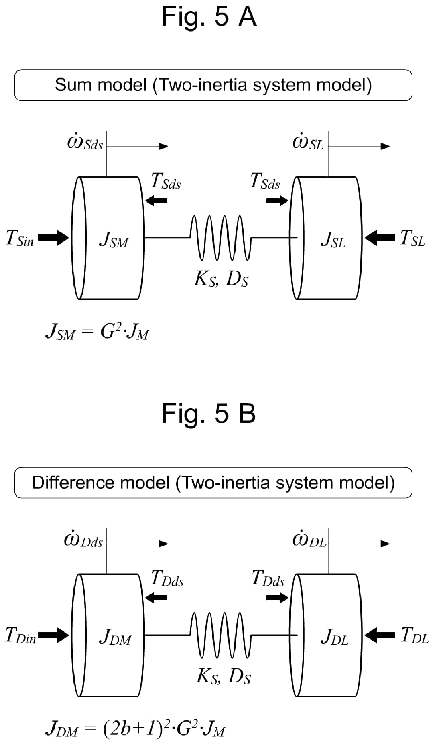

Fig. 5A is a schematic diagram of a sum model, and Fig. 5B is a schematic diagram of a difference model.
[Fig. 6]

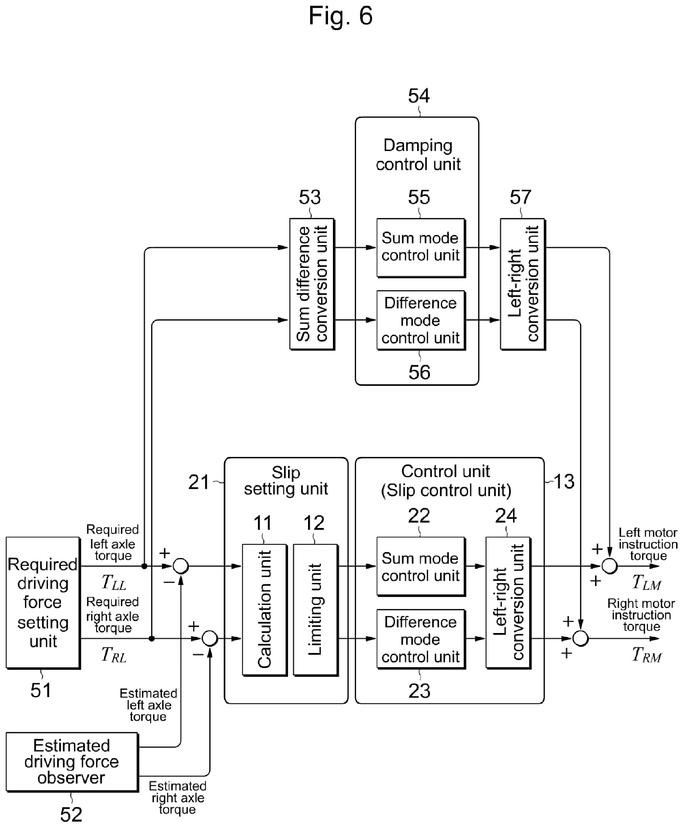

Fig. 6 is a block diagram illustrating functions (control examples) of a vehicle control device.
[Fig. 7]

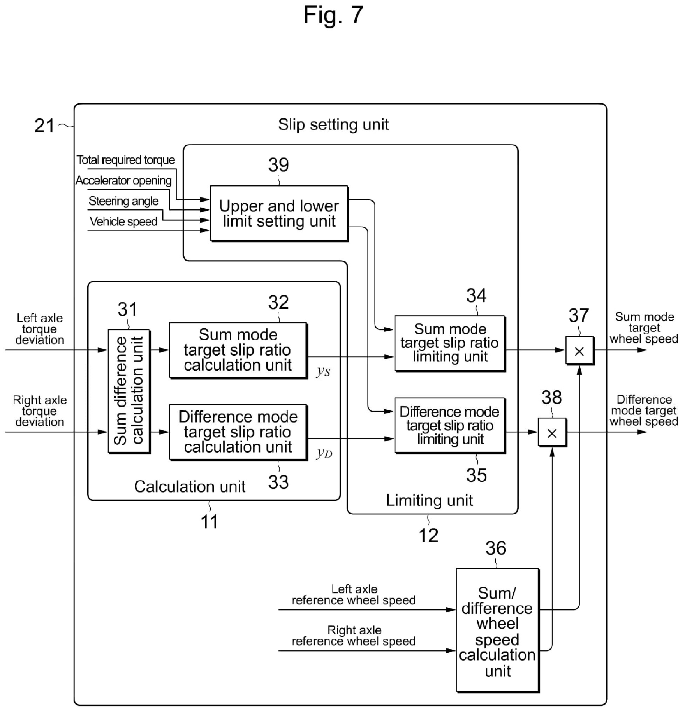

Fig. 7 is a block diagram illustrating functions (control examples) of a slip setting unit in Fig. 6.

[Fig. 8]

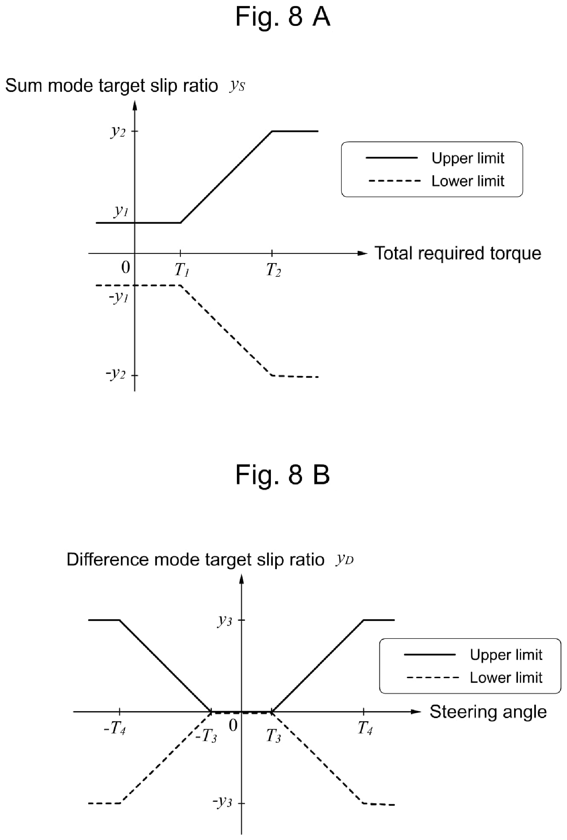

Fig. 8A is a graph showing an example in which an upper limit value and a lower limit value of a sum mode target slip ratio are set, and Fig. 8B is a graph showing an example in which an upper limit value and a lower limit value of a difference mode target slip ratio are set.

[Fig. 9]

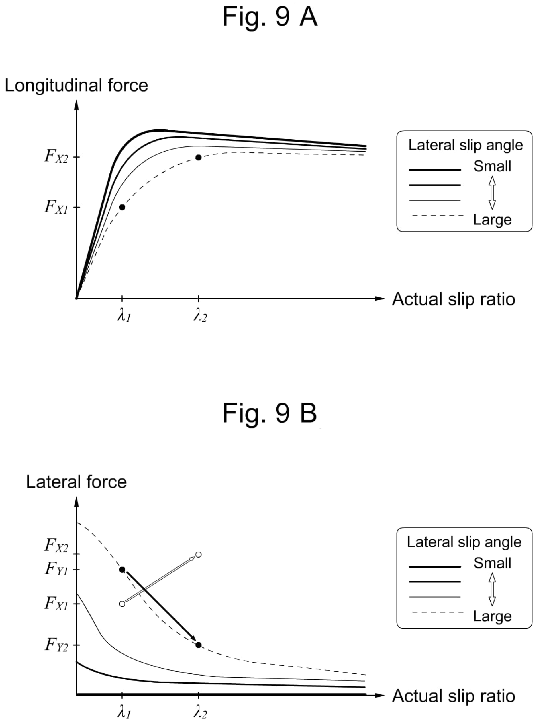

Fig. 9A is a graph showing a relationship between an actual slip ratio and a longitudinal force during turning for a plurality of side slip angles (lateral slip angle), and Fig. 9B is a graph showing a relationship between an actual slip ratio and a lateral force during turning for a plurality of side slip angles.

[Description of Embodiments]

The type of vehicle in which the disclosed vehicle control device and vehicle control method are used is, for example, an engine vehicle (gasoline automobile, diesel automobile), an electric vehicle, or a hybrid vehicle. The disclosed invention is a vehicle including a mechanism capable of adjusting driving forces of at least a left wheel and a right wheel (in other words, the left and right wheels, that is, left and right drive wheels), and the types and number of drive sources (internal combustion engine, motor, and the like) are not limited.

The disclosed invention is preferably applied to an automobile that travels by driving left and right wheels (left and right drive wheels) using a plurality of drive sources. Here, one of the plurality of drive sources is referred to as a left drive source, and one of the other drive sources is referred to as a right drive source. One of the left and right wheels located on the left side of the vehicle is referred to as a left wheel, and the other is referred to as a right wheel. The disclosed vehicle control device and vehicle control method can be used to control a vehicle including a left drive system including a left axle and a left wheel to which power from a left drive source is transmitted, and a right drive system including a right axle and a right wheel to which power from a right drive source is transmitted.

The layout of each of the left drive source and the right drive source may or may not be set to correspond to the left-right direction determined based on a traveling direction of the vehicle. In addition, the left drive system and the right drive system may operate independently of each other, or may be connected to each other via a transmission mechanism or a power distribution mechanism. The disclosed vehicle control device and vehicle control method can be utilized for control of an in-wheel motor vehicle in which each of the left and right wheels is driven by an individual motor, and can also be utilized for control of a torque vectoring vehicle in which the left and right wheels can transmit a driving force and a torque to each other.

1. Configuration

A vehicle control device 10 as an embodiment is mounted on a vehicle 1 illustrated in Fig. 1. The vehicle 1 includes left and right wheels 5 (wheels) disposed lined up in the vehicle width direction, a power distribution mechanism 3 (differential mechanism) that applies a torque difference to the left and right wheels 5, and a pair of motors 2 connected to the power distribution mechanism 3. In the drawing of the embodiment, alphabets L and R added to numerical symbols represent arrangement positions of elements according to the symbols (on the left side or the right side of the vehicle 1). For example, symbol 5L represents one (left wheel) of the left and right wheels 5 located on the left side of the vehicle 1, and symbol 5R represents the other (right wheel) located on the right side. The positions of the left and right wheels 5 in the front-rear direction are not limited, and may be the front wheels or the rear wheels of the vehicle 1.

The motor 2 (drive source) has a function of driving at least one of the front wheels or the rear wheels of the vehicle 1, and can have a function of driving all the four wheels. One of the pair of motors 2 which is disposed on the left side is a left motor 2L (left drive source), and the other disposed on the right side is a right motor 2R (right drive source). The left motor 2L and the right motor 2R operate independently of each other, and can individually output driving forces of different magnitudes. These motors 2 are connected to the power distribution mechanism 3 via a pair of speed reduction mechanisms provided separately from each other.

The vehicle 1 includes the power distribution mechanism 3 that amplifies a torque difference between the pair of motors 2 and distributes torque to each of the left and right wheels 5. The power distribution mechanism 3 of the present embodiment is a differential mechanism having a yaw control function (active yaw control (AYC) function), and is interposed between an axle 4 (left axle 4L) connected to the left wheel 5L and an axle 4 (right axle 4R) connected to the right wheel 5R. The yaw control function is a function of adjusting the yaw moment and stabilizing the posture of the vehicle 1 by actively controlling a sharing ratio of the driving forces (driving torque) of the left and right wheels 5. A planetary gear mechanism, a differential gear mechanism, and the like are incorporated in the power distribution mechanism 3. A vehicle drive device including the pair of motors 2 and the power distribution mechanism 3 is also referred to as a dual motor AYC (DM-AYC) device.

As illustrated in Fig. 2, the power distribution mechanism 3 includes a pair of speed reduction mechanisms (gear trains surrounded by a broken line in Fig. 2) that reduce the rotational speed of the motor 2, and a transmission mechanism (gear trains surrounded by an alternating dotted-dashed line in Fig. 2). The speed reduction mechanism is a mechanism that increases a torque by decelerating the speed of motor torque (driving force) output from the motor 2. A reduction ratio G of the speed reduction mechanism is appropriately set in accordance with the output characteristics and performance of the motor 2. When the torque performance of the motor 2 is sufficiently high, the speed reduction mechanism may be omitted. The transmission mechanism is a mechanism that amplifies a torque difference transmitted to each of the left and right wheels 5.

The transmission mechanism of the power distribution mechanism 3 illustrated in Fig. 2 includes a pair of planetary gear mechanisms. These planetary gear mechanisms have a structure in which planetary gears provided in respective carriers and rotation axes thereof are connected to each other. Each carrier rotatably supports the planetary gear and supports the planetary gear to revolve around a sun gear. Driving forces transmitted from the left and right motors 2 are input to a ring gear and a sun gear of one planetary gear mechanism. The driving forces transmitted to the left and right wheels 5 are extracted from a sun gear and a carrier of the other planetary gear mechanism. The structure of the power distribution mechanism 3 illustrated in Fig. 2 is merely an example for implementing the yaw control function, and other known structures can be used.

In Fig. 2, $J_M$ represents a motor inertia moment (the moment of inertia of the motor 2), and $J_w$ represents a wheel inertia moment (the moment of inertia of the left and right wheels 5). Regarding the parameters of the left drive system, $T_{LM}$ is a left motor input torque (left motor instruction torque), $T_{Lm}$ is a left motor input torque after deceleration by a deceleration mechanism, $\omega_{LM}$ is a left motor angular velocity, $\omega_{Lm}$ is a left motor angular velocity after deceleration by the deceleration mechanism, $T_{Lin}$ is a left driving side torque, $T_{Lds}$ is a left axle torque, $T_{LL}$ is a left wheel load side torque, $\omega_{Lds}$ is a left driving side angular velocity, and $\omega_{LL}$ is a left wheel angular velocity (a target speed of the left wheel 5L). Similarly, regarding the parameters of the right drive system, $T_{RM}$ is a right motor input torque (right motor instruction torque), $T_{Rm}$ is a right motor input torque after deceleration by the deceleration mechanism, $\omega_{RM}$ is a right motor angular velocity, $\omega_{Rm}$ is a right motor angular velocity after deceleration by the deceleration mechanism, $T_{Rin}$ is a right driving side torque, $T_{Rds}$ is a right axle torque, $T_{RL}$ is a right wheel load side torque, $\omega_{Rds}$ is a right driving side angular velocity, and $\omega_{RL}$ is a right wheel angular velocity (a target speed of the right wheel 5R).

Fig. 3 is a speed diagram of the power distribution mechanism 3. In Figs. 2 and 3, $b_1$ and $b_2$ represent torque difference amplification factors (deceleration rate, differential deceleration ratio) determined in accordance with the structure of the gear incorporated in the power distribution mechanism 3. The torque difference amplification factor related to the power transmission from the left motor 2L to the right wheel 5R is $b_1$, and a torque difference amplification factor related to the power transmission from the left motor 2L to the left wheel 5L is $b_1+1$. The torque difference amplification factor related to the power transmission from the right motor 2R to the left wheel 5L is $b_2$, and a torque difference amplification factor related to the power transmission from the right motor 2R to the right wheel 5R is $b_2+1$.

As illustrated in Fig. 1, each of the pair of motors 2 is electrically connected to a battery 7 via an inverter 6 (6L, 6R). The inverter 6 is a conversion device (DC-AC inverter) that mutually converts power (DC power) of a DC circuit on the battery 7 side and power (AC power) of an AC circuit on the motor 2 side. The battery 7 is, for example, a lithium ion secondary battery or a nickel-metal hydride secondary battery, and is a secondary battery capable of supplying a high voltage direct current of several hundred volts. During powering of the motor 2, the DC power is converted into AC power by the inverter 6 and supplied to the motor 2. During power generation by the motor 2, the generated power is converted into DC power by the inverter 6 and charged in the battery 7. The operating state of the inverter 6 is controlled by the vehicle control device 10.

The vehicle control device 10 is one of electronic control devices (ECU, Electronic Control Unit) mounted on the vehicle 1. The vehicle control device 10 has a function of controlling output for each of the left motor 2L and the right motor 2R in the vehicle 1 including the left drive system including the left axle 4L and the left wheel 5L to which power from the left motor 2L (left drive source) is transmitted and the right drive system including the right axle 4R and the right wheel 5R to which power from the right motor 2R (right drive source) is transmitted.

The vehicle control device 10 incorporates a processor (central processing unit), a memory (main memory), a storage device (storage), an interface device, and the like (not illustrated), which are communicably connected to each other via an internal bus. The contents of determination and control performed by the vehicle control device 10 are recorded and saved in the memory as firmware or an application program, and when the program is executed, the contents of the program are expanded in a memory space and executed by the processor.

To the vehicle control device 10, an accelerator opening sensor 14, a brake sensor 15, a steering angle sensor 16, a resolver 17, and a wheel speed sensor 18 are connected. The accelerator opening sensor 14 is a sensor that detects a depression amount (accelerator opening degree) of an accelerator pedal and a depression speed thereof. The brake sensor 15 is a sensor that detects a depression amount (brake pedal stroke) of a brake pedal and a depression speed thereof. The steering angle sensor 16 is a sensor that detects a steering angle (actual tire-turning angles or a rotation angle of a steering wheel) of the left and right wheels 5.

The resolvers 17 (17L, 17R) are sensors that detect the speeds of the motors 2, and provided one for each of the pair of motors 2. The resolvers 17 output information of the rotation angles of the motors 2 in the form of two-phase AC voltages. The speed of the motor 2 is grasped from changes in the AC voltage over time. The wheel speed sensors 18 (18L, 18R) are sensors that detect the speeds of the axles 4. The vehicle control device 10 controls the output of the pair of motors 2 (2L, 2R) by controlling the operating state of the inverters 6 (6L, 6R) on the basis of pieces of information detected by the various sensors 14 to 18 mentioned above. Instead of the resolvers 17, another sensor (hall sensor, encoder, or the like) having a different internal structure and operation principle may be used.

2. Vehicle control device

As illustrated in Fig. 1, the vehicle control device 10 includes a sum model M1, a difference model M2, a calculation unit 11, a limiting unit 12, and a control unit 13 as elements for controlling the driving forces of the left drive system and the right drive system. These elements are illustrated by classifying the functions of the vehicle control device 10 for convenience. These elements may be described as independent programs for implementing the functions of the respective elements. Alternatively, a plurality of elements may be combined and described as one composite program.

The sum model M1 is a model obtained by modeling motion states of the left drive system (a power transmission path from the left motor 2L to the left wheel 5L) and the right drive system (a power transmission path from the right motor 2R to the right wheel 5R) when the vehicle 1 travels straight, in order to grasp the motion states. A parameter input to the sum model M1 is equivalent to the sum of a parameter input to the left drive system and a parameter input to the right drive system, and is referred to as a "sum model state quantity". The difference model M2 is a model obtained by modeling the motion states of the left drive system and the right drive system during turning of the vehicle 1, in order to grasp the motion states. A parameter input to the difference model M2 is equivalent to a difference between the parameter input to the left drive system and the parameter input to the right drive system, and is referred to as a "difference model state quantity".

The calculation unit 11 calculates a sum mode target slip ratio $y_S$ (a target slip ratio of the sum model M1) equivalent to the sum of target values of the slip ratios of the left wheel 5L and the right wheel 5R and a difference mode target slip ratio $y_D$ (a target slip ratio of the difference model M2) equivalent to a difference between the target values of the slip ratios. The calculation unit 11 calculates the sum mode target slip ratio $y_S$ and the difference mode target slip ratio $y_D$ based on, for example, a required driving force and an estimated driving force of the vehicle 1. The required driving force mentioned here includes a required torque, a required rotation speed (required angular velocity), and a required output (required horsepower, required power) related to the motor 2 and the left and right wheels 5, and the estimated driving force includes an estimated torque, an estimated rotation speed (required angular velocity), and an estimated output (estimated horsepower, estimated power) related to the motor 2 and the left and right wheels 5.

In the vehicle control device 10 of the present embodiment, a difference (left axle torque deviation) between a required left axle torque $T_{LL}$ required for the left axle 4L and an estimated left axle torque which is the actual estimated torque value of the left axle 4L is calculated, and a difference (left axle torque deviation) between a required right axle torque $T_{RL}$ required for the right axle 4R and an estimated right axle torque which is the actual estimated torque value of the right axle 4R is calculated. The calculation unit 11 calculates a sum model torque deviation equivalent to the sum of the left axle torque deviation and the right axle torque deviation, and calculates a difference model torque deviation equivalent to the difference between the left axle torque deviation and the left axle torque deviation. Thereafter, the sum mode target slip ratio $y_S$ is calculated based on the sum model torque deviation, and the difference mode target slip ratio $y_D$ is calculated based on the difference model torque deviation.

The limiting unit 12 is a unit (limiter) that sets upper limit values and lower limit values of the sum mode target slip ratio $y_S$ and the difference mode target slip ratio $y_D$, and limits each of the sum mode target slip ratio $y_S$ and the difference mode target slip ratio $y_D$ calculated by the calculation unit 11 to a value that is less than or equal to the upper limit value and greater than or equal to the lower limit value. The upper limit value and the lower limit value of the sum mode target slip ratio $y_S$ have the same absolute value and are values different only in sign. The upper limit value and the lower limit value of the difference mode target slip ratio $y_D$ have the same absolute value and are values different only in sign. The upper limit value of the sum mode target slip ratio $y_S$ does not necessarily coincide with the upper limit value of the difference mode target slip ratio $y_D$, and may be set to a different value.

The control unit 13 controls driving forces of the left drive system and the right drive system, based on the sum mode target slip ratio $y_S$ and the difference mode target slip ratio $y_D$, which are limited by the limiting unit 12, and the sum model M1 and the difference model M2. The control unit 13 controls the driving forces of the left drive system and the right drive system using a sum mode instruction torque Ts obtained by applying the sum mode target slip ratio $y_S$, which is limited by the limiting unit 12, to the sum model M1 and a difference mode instruction torque $T_D$ obtained by applying the difference mode target slip ratio $y_D$, which is limited by the limiting unit 12, to the difference model M2. Here, a left motor instruction torque $T_{LM}$ and a right motor instruction torque $T_{RM}$ are calculated such that both the sum mode instruction torque Ts and the difference mode instruction torque $T_D$ are achieved. Thereafter, the inverter 6 is controlled so as to obtain the calculated left motor instruction torque $T_{LM}$ and right motor instruction torque $T_{RM}$. Thereby, the motion states of the left drive system and the right drive system are easily controlled to be desired states and with high accuracy.

Fig. 4 is a schematic diagram illustrating the structures of the left drive system and the right drive system of the vehicle 1. Each of the left axle 4L and the right axle 4R can correspond to a structure in which a spring (axle rigidity $K_s$) and a damper (axle viscosity $D_s$) are connected in parallel. In Fig. 4, $J_{LM}$ is an inertia moment on the power distribution mechanism 3 side (driving side) with respect to the left axle 4L, $J_{Lw}$ is an inertia moment on the left wheel 5L side (load side) with respect to the left axle 4L, $J_{RM}$ is an inertia moment on the power distribution mechanism 3 side (driving side) with respect to the right axle 4R, and $J_{Rw}$ is an inertia moment on the right wheel 5R side (load side) with respect to the right axle 4R. Fig. 4 also illustrates a differential value (left driving side angular acceleration) of a left driving side angular velocity $\omega_{Lds}$, a differential value (left wheel angular acceleration) of a left wheel angular velocity $\omega_{LL}$, a differential value (right driving side angular acceleration) of a right driving side angular velocity $\omega_{Rds}$, and a differential value (right wheel angular acceleration) of a right wheel angular velocity $\omega_{RL}$.

Based on the above schematic diagram, the configuration of the sum model M1 can be modeled as a configuration as illustrated in Fig. 5A, and the configuration of the difference model M2 can be modeled as a configuration as illustrated in Fig. 5B. The sum model M1 is suitable for use in damping control and slip control for the axle 4 and the left and right wheels 5 related to straight traveling of the vehicle 1, and the difference model M2 is suitable for use in damping control and slip control for the axle 4 and the left and right wheels 5 related to turning of the vehicle 1. In the present embodiment, both the sum model M1 and the difference model M2 are two-inertia system models, but each of the models may be configured as a multi-inertia system model including three or more inertia moments or spring dampers.

As illustrated in Fig. 5A, the sum model M1 includes a driving side inertia moment $J_{SM}$, a spring damper designed with a rigidity $K_s$ and a viscosity $D_s$, and a load side inertia moment (sum mode wheel nominal inertia moment) $J_{SL}$. The driving side inertia moment $J_{SM}$ is calculated based on an inertia moment $J_M$ of a drive source (a left drive source and a right drive source), and for example, $J_{SM} = G^2 J_M$. The load side inertia moment $J_{SL}$ is calculated based on a vehicle body weight M (converted to wheel terms). Friction may also be considered in calculating the driving side inertia moment $J_{SM}$ and the load side inertia moment $J_{SL}$. Equations of motion according to the sum model M1 are shown below.

[Math. 1]

Equation of motion of driving side

$$J_{SM}\dot{\omega}_{Sds} = T_{Sin} - T_{Sds}$$

Equation of motion of load side

$$J_{SL}\dot{\omega}_{SL} = T_{Sds} - T_{SL}$$

Equation of motion of spring damper system

$$T_{Sds} = K_S \int (\omega_{Sds} - \omega_{SL}) + D_S(\omega_{Sds} - \omega_{SL})$$

As illustrated in Fig. 5B, the difference model M2 includes a driving side inertia moment $J_{DM}$ which is an equivalent inertia moment when a left-right difference occurs (during turning), a spring damper designed with a rigidity $K_s$ and a viscosity $D_s$, and a load side inertia moment (difference mode wheel nominal inertia moment) $J_{DL}$. The driving side inertia moment $J_{DM}$ is calculated based on the inertia moment $J_M$ of the drive sources (the left drive source and the right drive source) and the torque difference amplification factors ($b_1$, $b_2$, and the like) of the power distribution mechanism 3, and for example, $J_{DM} = (2b_1 + 1)^2 G^2 J_M$. The load side inertia moment $J_{DL}$ is calculated based on the yaw inertia moment (converted to wheel terms) of the vehicle 1. Friction may also be considered in calculating the driving side inertia moment $J_{DM}$ and the load side inertia moment $J_{DL}$. Equations of motion according to the difference model M2 are shown below.

[Math. 2]

Equation of motion of driving side

$$J_{DM}\dot{\omega}_{Dds} = T_{Din} - T_{Dds}$$

Equation of motion of load side

$$J_{DL}\dot{\omega}_{DL} = T_{Dds} - T_{DL}$$

Equation of motion of spring damper system

$$T_{Dds} = K_S \int (\omega_{Dds} - \omega_{DL}) + D_S(\omega_{Dds} - \omega_{DL})$$

By applying a sum model state quantity to the sum model M1, parameters representing the motion states of the left drive system and the right drive system when the vehicle 1 travels straight are acquired. For example, a sum mode instruction torque Ts is obtained by applying the sum mode target slip ratio $y_S$ to the sum model M1. The same applies to the difference model M2, and a difference model state quantity is applied to the difference model M2, thereby acquiring parameters representing the motion states of the left drive system and the right drive system during turning of the vehicle 1. For example, a difference mode instruction torque $T_D$ is obtained by applying the difference mode target slip ratio $y_D$ to the difference model M2.

3. Specific example

Fig. 6 is a block diagram illustrating a specific control example by the vehicle control device 10. The vehicle control device 10 is provided with a slip setting unit 21 including the calculation unit 11 and the limiting unit 12, and the control unit 13 has a function of calculating a control amount related to slip control of the vehicle 1. The control unit 13 is provided with a sum mode control unit 22, a difference mode control unit 23, and a left-right conversion unit 24. In the control unit 13, for example, a sum model M1 and a difference model M2 for slip control are prepared.

The vehicle control device 10 is provided with a required driving force setting unit 51, an estimated driving force observer 52, a sum difference conversion unit 53, a damping control unit 54, and a left-right conversion unit 57. The damping control unit 54 has a function of calculating a control amount related to damping control (vibration suppression control) of the vehicle 1. In the damping control unit 54, a sum model M1 and a difference model M2 for damping control which are different from the sum model M1 and the difference model M2 for slip control are prepared. In the vehicle control device 10, the sum of the control amount of the slip control by the control unit 13 and the control amount of the damping control by the damping control unit 54 is final motor instruction torques $T_{LM}$ and $T_{RM}$.

The required driving force setting unit 51 sets a required driving force requested by the driver for the vehicle 1. Here, for example, the required left axle torque $T_{LL}$ required for the left axle 4L and the required right axle torque $T_{RL}$ required for the right axle 4R are calculated based on an accelerator opening, a brake pedal stroke, a steering angle, a vehicle speed, and the like. Information on the required left axle torque $T_{LL}$ and the required right axle torque $T_{RL}$ calculated here is transmitted to the sum difference conversion unit 53.

The estimated driving force observer 52 calculates an estimated value equivalent to the actual driving force of the vehicle 1. Here, for example, an estimated left axle torque $T_{LL}'$ which is an estimation drive torque value of the left axle 4L and an estimated right axle torque $T_{RL}'$ which is an estimation drive torque value of the right axle 4R are calculated based on a motor instruction torque according to a control signal output to the inverter 6 in the immediately preceding control cycle, a motor angular velocity detected by the resolver 17, a wheel speed detected by the wheel speed sensor 18, and the like. The vehicle control device 10 calculates a left axle torque deviation obtained by subtracting the estimated left axle torque $T_{LL}'$ from the required left axle torque $T_{LL}$ and a right axle torque deviation obtained by subtracting the estimated right axle torque $T_{RL}'$ from the required right axle torque $T_{RL}$. Information on the left axle torque deviation and the right axle torque deviation calculated here is transmitted to the calculation unit 11 of the slip setting unit 21.

The sum difference conversion unit 53 calculates a sum mode torque and a difference mode torque of the required left axle torque $T_{LL}$ and the required right axle torque $T_{RL}$. The value of the sum mode torque is, for example, half of the sum of the required left axle torque $T_{LL}$ and the required right axle torque $T_{RL}$. Information on the sum mode torque is transmitted to a sum mode control unit 55 of the damping control unit 54. The value of the difference mode torque is, for example, half a difference between the required left axle torque $T_{LL}$ and the required right axle torque $T_{RL}$. Information on the difference mode torque is transmitted to a difference mode control unit 56 of the damping control unit 54.

The sum mode control unit 55 applies the sum mode torque calculated by the sum difference conversion unit 53 to the sum model M1 for damping control to calculate a sum mode torque in which vibration (for example, sum mode-corresponding vibration of approximately several hertz to ten-odd hertz) that may occur when the vehicle 1 travels straight is suppressed. The difference mode control unit 56 applies the difference mode torque calculated by the sum difference conversion unit 53 to the difference model M2 for damping control to calculate a difference mode torque in which vibration (for example, vibration having a frequency lower than that of vibration corresponding to the sum mode) that may occur during turning of the vehicle 1 is suppressed.

The left-right conversion unit 57 performs calculation of distributing the sum mode torque obtained by the sum mode control unit 55 and the difference mode torque obtained by the difference mode control unit 56 to the left and right motors 2. Here, an instruction torque for damping control to be applied to each of the left motor 2L and the right motor 2R is calculated by the calculation equivalent to the inverse calculation of the sum difference conversion unit 53. For example, a sum of the sum mode torque obtained by the sum mode control unit 55 and the difference mode torque obtained by the difference mode control unit 56 is set as a left motor instruction torque for damping control. A difference between the sum mode torque obtained by the sum mode control unit 55 and the difference mode torque obtained by the difference mode control unit 56 is set as a right motor instruction torque for damping control.

The slip setting unit 21 sets a parameter related to target slip ratios of the left and right wheels 5. Fig. 7 is a block diagram illustrating a specific control example by the slip setting unit 21. The slip setting unit 21 is provided with the calculation unit 11 and the limiting unit 12, which are described above, a sum/difference wheel speed calculation unit 36, and multipliers 37 and 38. The calculation unit 11 includes a sum difference calculation unit 31, a sum mode target slip ratio calculation unit 32, and a difference mode target slip ratio calculation unit 33. The limiting unit 12 is provided with an upper and lower limit setting unit 39, a sum mode target slip ratio limiting unit 34 and a difference mode target slip ratio limiting unit 35.

The sum difference calculation unit 31 calculates a sum model torque deviation equivalent to the sum of the left axle torque deviation and the right axle torque deviation and a difference model torque deviation equivalent to the difference between the left axle torque deviation and the left axle torque deviation. The value of the sum model torque deviation is, for example, half of the sum of the left axle torque deviation and the right axle torque deviation. Information on the sum model torque deviation is transmitted to the sum mode target slip ratio calculation unit 32. The value of the difference model torque deviation is, for example, half the difference between the left axle torque deviation and the right axle torque deviation. Information on the difference model torque deviation is transmitted to the difference mode target slip ratio calculation unit 33.

The sum mode target slip ratio calculation unit 32 calculates a sum mode target slip ratio $y_S$ equivalent to the sum of target values of the slip ratios of the left wheel 5L and the right wheel 5R. Here, the sum mode target slip ratio $y_S$ is calculated based on the required driving force and the estimated driving force of the vehicle 1. For example, the sum mode target slip ratio $y_S$ is calculated based on a value obtained by integrating a value (error) which is obtained by subtracting the estimated driving force from the required driving force. In the present embodiment, the sum mode target slip ratio $y_S$ is calculated based on a value obtained by integrating the sum model torque deviation. Information on the sum mode target slip ratio $y_S$ calculated here is transmitted to the sum mode target slip ratio limiting unit 34.

The difference mode target slip ratio calculation unit 33 calculates a difference mode target slip ratio $y_D$ equivalent to a difference between target values of the slip ratios of the left wheel 5L and the right wheel 5R. Here, the difference mode target slip ratio $y_D$ is calculated based on the required driving force and the estimated driving force of the vehicle 1. For example, the difference mode target slip ratio $y_D$ is calculated based on a value obtained by integrating a value (error) which is obtained by subtracting the estimated driving force from the required driving force. In the present embodiment, the difference mode target slip ratio $y_D$ is calculated based on a value obtained by integrating the difference model torque deviation. Information on the difference mode target slip ratio $y_D$ calculated here is transmitted to the difference mode target slip ratio limiting unit 35.

The upper and lower limit setting unit 39 sets the upper limit values and the lower limit values for each of the sum mode target slip ratio $y_S$ and the difference mode target slip ratio $y_D$. Here, at least the upper limit value and the lower limit value of the sum mode target slip ratio $y_S$ are variably set. The upper limit value of the sum mode target slip ratio $y_S$ is set as a variable value that varies within a range of, for example, approximately 0.1 to 0.7. The lower limit value of the sum mode target slip ratio $y_S$ is set as a variable value that varies within a range of, for example, approximately -0.7 to -0.1 so as to correspond to the upper limit value.

The upper limit value and the lower limit value of the difference mode target slip ratio $y_D$ may be fixed values set in advance, or may be set as variable values that may vary depending on the situation. When the values are fixed values, both the upper limit value and the lower limit value may be set to 0. The upper limit value may be a fixed value within a range of, for example, approximately 0 to 0.1. The lower limit value of the difference mode target slip ratio $y_D$ may be a fixed value within a range of, for example, approximately -0.1 to 0 so as to correspond to the upper limit value. Information on the upper and lower limit values of the sum mode target slip ratio $y_S$ is transmitted to the sum mode target slip ratio limiting unit 34, and information on the upper and lower limit values of the difference mode target slip ratio $y_D$ is transmitted to the difference mode target slip ratio limiting unit 35.

The upper and lower limit values of the sum mode target slip ratio $y_S$ are set as variable values based on parameters related to a driver's operation inputs, such as an accelerator opening degree, a brake pedal stroke, and a rotation angle of a steering wheel. Alternatively, the upper limit value and the lower limit value of the sum mode target slip ratio $y_S$ are set as variable values based on parameters related to a traveling state of the vehicle 1 such as a vehicle speed, a required torque, a yaw rate, a roll rate, a pitch rate, and the steering angle of the left and right wheels 5.

Fig. 8A is a graph showing an example in which an upper limit value (solid line) and a lower limit value (broken line) of the sum mode target slip ratio $y_S$ are set based on a total required torque. The total required torque is, for example, a torque equivalent to the sum of the required left axle torque $T_{LL}$ and the required right axle torque $T_{RL}$. Alternatively, the total required torque is a torque equivalent to the sum of a torque required for the front wheel and a torque required for the rear wheel of the vehicle 1. The value of the total required torque is calculated based on, for example, an accelerator opening degree, a brake pedal stroke, and a vehicle speed (motor angular velocity).

In Fig. 8A, when the total required torque is less than a positive predetermined value $T_1$, the upper limit value of the sum mode target slip ratio $y_S$ is set to a positive predetermined value $y_1$, and the lower limit value is set to a negative predetermined value $-y_1$. When the total required torque is greater than or equal to a predetermined value $T_2$ (where $T_1 < T_2$), the upper limit value of the sum mode target slip ratio $y_S$ is set to a positive predetermined value $y_2$ (where $y_1 < y_2$), and the lower limit value is set to a negative predetermined value $-y_2$. When the total required torque is greater than or equal to the predetermined value $T_1$ and less than the predetermined value $T_2$, absolute values of the upper limit value and the lower limit value increase as the total required torque increases.

Fig. 8B is a graph showing an example in which an upper limit value (solid line) and a lower limit value (broken line) of the difference mode target slip ratio $y_D$ are set based on a steering angle. Here, when the steering angle is greater than or equal to a negative predetermined value $-T_3$ and less than a positive predetermined value $T_3$, both the upper limit value and the lower limit value of the difference mode target slip ratio $y_D$ are set to 0. When the steering angle is greater than or equal to a positive predetermined value $T_4$ (where $T_3 < T_4$) or less than a negative predetermined value $-T_4$, the upper limit value of the difference mode target slip ratio $y_D$ is set to a positive predetermined value $y_3$ and the lower limit value is set to a negative predetermined value $-y_3$. When the steering angle is greater than or equal to the predetermined value $T_3$ and less than the predetermined value $T_4$, absolute values of the upper limit value and the lower limit value increase as the steering angle increases. When the steering angle is greater than or equal to the predetermined value $-T_4$ and less than the predetermined value $-T_3$, absolute values of the upper limit value and the lower limit value decrease as the steering angle increases.

The sum mode target slip ratio limiting unit 34 limits the value of the sum mode target slip ratio $y_S$ so that the sum mode target slip ratio $y_S$ falls within a range from the lower limit value to the upper limit value based on the information on the upper limit value and the lower limit value of the sum mode target slip ratio $y_S$ set by the upper and lower limit setting unit 39. When the value of the sum mode target slip ratio $y_S$ calculated by the calculation unit 11 (sum mode target slip ratio calculation unit 32) exceeds the upper limit value, the value is replaced with the upper limit value and output from the sum mode target slip ratio limiting unit 34. In contrast, when the value of the sum mode target slip ratio $y_S$ is less than the lower limit value, the value is replaced with the lower limit value and output from the sum mode target slip ratio limiting unit 34. When the value of the sum mode target slip ratio $y_S$ is greater than or equal to the lower limit value and less than or equal to the upper limit value, the intact value is output from the sum mode target slip ratio limiting unit 34.

Similarly, the difference mode target slip ratio limiting unit 35 limits the value of the difference mode target slip ratio $y_D$ so that the difference mode target slip ratio $y_D$ falls within a range from the lower limit value to the upper limit value based on the information on the upper limit value and the lower limit value of the difference mode target slip ratio $y_D$ set by the upper and lower limit setting unit 39. When the value of the difference mode target slip ratio $y_D$ calculated by the calculation unit 11 (difference mode target slip ratio calculation unit 33) exceeds the upper limit value, the value is replaced with the upper limit value and output from the difference mode target slip ratio limiting unit 35. In contrast, when the value of the difference mode target slip ratio $y_D$ is less than the lower limit value, the value is replaced with the lower limit value and output from the difference mode target slip ratio limiting unit 35. When the value of the difference mode target slip ratio $y_D$ is greater than or equal to the lower limit value and less than or equal to the upper limit value, the intact value is output from the difference mode target slip ratio limiting unit 35.

The sum/difference wheel speed calculation unit 36 calculates a sum model reference wheel speed equivalent to a sum of a left axle reference wheel speed and a right axle reference wheel speed, and a difference model reference wheel speed equivalent to a difference between the left axle reference wheel speed and the right axle reference wheel speed. The value of the sum model reference wheel speed is, for example, half of the sum of the left axle reference wheel speed and the right axle reference wheel speed, and the value of the difference model reference wheel speed is, for example, half of the difference between the left axle reference wheel speed and the right axle reference wheel speed. The values of the left axle reference wheel speed and the right axle reference wheel speed are calculated based on, for example, a detection value of the wheel speed sensor 18, a steering angle, and the like.

The multiplier 37 multiplies the sum mode target slip ratio $y_S$ output from the sum mode target slip ratio limiting unit 34 by the sum model reference wheel speed to output a sum mode target wheel speed. Information on the sum mode target wheel speed output here is transmitted to the sum mode control unit 22 of the control unit 13. The multiplier 38 outputs a difference mode target wheel speed by multiplying the difference mode target slip ratio $y_D$ output from the difference mode target slip ratio limiting unit 35 by the difference model reference wheel speed. Information on the difference mode target wheel speed output here is transmitted to the difference mode control unit 23 of the control unit 13.

The sum mode control unit 22 calculates a sum mode torque for optimizing a slip ratio when the vehicle 1 travels straight by applying the sum mode target wheel speed obtained by the slip setting unit 21 to the sum model M1 for slip control. The difference mode control unit 23 calculates a difference mode torque for optimizing a slip ratio during turning of the vehicle 1 by applying the difference mode target wheel speed obtained by the slip setting unit 21 to the difference model M2 for slip control.

Similarly to the left-right conversion unit 57, the left-right conversion unit 24 performs calculation of distributing the sum mode torque obtained by the sum mode control unit 22 and the difference mode torque obtained by the difference mode control unit 23 to the left and right motors 2. For example, a sum of the sum mode torque and the difference mode torque is set as a left motor instruction torque for slip control, and a difference between the sum mode torque and the difference mode torque is set as a right motor instruction torque for slip control.

The final left motor instruction torque $T_{LM}$ is obtained by adding the left motor instruction torque for damping control obtained by the left-right conversion unit 57 and the left motor instruction torque for slip control obtained by the left-right conversion unit 24. Similarly, the final right motor instruction torque $T_{RM}$ is obtained by adding the right motor instruction torque for damping control obtained by the left-right conversion unit 57 and the right motor instruction torque for slip control obtained by the left-right conversion unit 24.

4. Effect

(1) The vehicle control device 10 of the present embodiment controls the driving forces of the left drive system and the right drive system in the vehicle 1 including the left drive system that transmits power from the left motor 2L (left drive source) to the left wheel 5L and the right drive system that transmits power from the right motor 2R (right drive source) to the right wheel 5R. The vehicle control device 10 includes the sum model M1 obtained by modeling motion states of the left drive system and the right drive system during straight traveling, and the difference model M2 obtained by modeling motion states of the left drive system and the right drive system during turning.

The vehicle control device 10 includes the calculation unit 11, the limiting unit 12, and the control unit 13. The calculation unit 11 calculates the sum mode target slip ratio $y_S$ equivalent to the sum of the target values of the slip ratios of the left wheel 5L and the right wheel 5R and the difference mode target slip ratio $y_D$ equivalent to the difference between the target values of the slip ratios. The limiting unit 12 limits the sum mode target slip ratio $y_S$ and the difference mode target slip ratio $y_D$ with the upper limit value and the lower limit value of each of the ratios $y_S$ and $y_D$. The control unit 13 controls the driving forces of the left drive system and the right drive system, based on the sum mode target slip ratio $y_S$ and the difference mode target slip ratio $y_D$, which are limited by the limiting unit 12, and the sum model M1 and the difference model M2. The upper limit value and the lower limit value of the sum mode target slip ratio $y_S$ are variably set.

In this manner, by setting the upper limit value and the lower limit value of the sum mode target slip ratio $y_S$ as variable values, for example, the sum of the target slip ratios of the right and left wheels 5 can be increased to make it easy to slip, and conversely, the sum of the target slip ratios of the right and left wheels 5 can be decreased to make it difficult to slip. Thus, the target slip ratios of the right and left wheels 5 can be comprehensively changed, and controllability regarding a balance between the longitudinal force and the lateral force of the wheels can be improved. The balance between the longitudinal force and the lateral force will be described in detail.

Fig. 9A is a graph showing a relationship between an actual slip ratio and a longitudinal force [a longitudinal component of a frictional force acting on a wheel (a circumferential component of the wheel)] during turning of the vehicle 1. In Fig. 9A, for example, a relationship between an actual slip ratio and a longitudinal force obtained when the magnitude of a side slip angle that changes depending on a rotation angle of a steering wheel is changed in four stages is illustrated by four graphs. A graph of a thick solid line corresponds to a case where the side slip angle is relatively small, and a graph of a thin broken line corresponds to a case where the side slip angle is relatively large. Fig. 9B is a graph showing a relationship between an actual slip ratio and a lateral force [a lateral component of a frictional force acting on a wheel (a component in a direction orthogonal to the circumferential direction of the wheel)] during turning of the vehicle 1. Fig. 9B also shows four graphs corresponding to respective cases where the magnitude of the side slip angle is changed in four stages.

As illustrated in Fig. 9A, when the actual slip ratio is increased from $\lambda_1$ to $\lambda_2$ in a turning state (for example, the graph of the thin broken line) in which the side slip angle is large to some extent, the longitudinal force increases from $F_{X1}$ to $F_{X2}$. On the other hand, as illustrated in Fig. 9B, the lateral force decreases from $F_{Y1}$ to $F_{Y2}$ by increasing the actual slip ratio from $\lambda_1$ to $\lambda_2$ in a turning state (for example, the graph of the thin broken line) in which the side slip angle is large to some extent.

Here, when points corresponding to the longitudinal forces $F_{X1}$ and $F_{X2}$ in Fig. 9A are plotted by white circles in Fig. 9A, it can be seen that a magnitude relationship between the longitudinal force and the lateral force is reversed by changing the actual slip ratio from $\lambda_1$ to $\lambda_2$. That is, when the actual slip ratio is $\lambda_1$, the lateral force is larger than the longitudinal force ($F_{X1} < F_{Y1}$), whereas when the actual slip ratio is $\lambda_2$, the longitudinal force is larger than the lateral force ($F_{Y2} < F_{X2}$).

Thus, when the upper limit value of the sum mode target slip ratio $y_S$ is set to be large (the lower limit value is set to be small), the absolute value of the actual slip ratio is allowed to be a larger value, and an increase in the longitudinal force and a decrease in the lateral force are easily promoted. In other words, it is possible to change a balance between the longitudinal force and the lateral force of the wheels by making the upper limit value and the lower limit value of the sum mode target slip ratio $y_S$ variable. Thereby, for example, the driver can step on the accelerator pedal to increase the actual slip ratio, increase the longitudinal force, and decrease the lateral force, and it is possible to achieve a desired turning state (for example, a drift state) as the driver desires. When the actual slip ratio is reduced by releasing the accelerator pedal, it is possible to increase the lateral force and decrease the longitudinal force, and a turning state (for example, a grip state) intended by the driver can be achieved at will.

(2) In the present embodiment, the upper limit value and the lower limit value of the sum mode target slip ratio $y_S$ can be changed depending on a parameter related to a driver's operation input. Specific examples of the parameter include an accelerator opening degree, a brake pedal stroke, a rotation angle of a steering wheel, and the like. With such a configuration, it is possible to accurately set an appropriate range of the sum mode target slip ratio $y_S$ according to the driver's operation input. Thus, it is possible to further improve controllability relating to a balance between a longitudinal force and a lateral force of the wheels.

(3) In the present embodiment, the upper limit value and the lower limit value of the sum mode target slip ratio $y_S$ can be changed depending on a parameter related to a traveling state of the vehicle. Specific examples of the parameter include a vehicle speed, a required torque, a yaw rate, a roll rate, a pitch rate, and a steering angle of the left and right wheels 5. With such a configuration, it is possible to accurately set an appropriate range of the sum mode target slip ratio $y_S$ according to a traveling state of the vehicle 1. Thus, it is possible to further improve controllability relating to a balance between a longitudinal force and a lateral force of the wheels.

(4) In the present embodiment, not only the upper limit value and the lower limit value of the sum mode target slip ratio $y_S$, but also the upper limit value and the lower limit value of the difference mode target slip ratio $y_D$ can be variably set. With such a configuration, it is possible to appropriately adjust a difference in the actual slip ratio between the right and left wheels 5 during turning to improve the turning performance and stability. The upper limit value and the lower limit value of the difference mode target slip ratio $y_D$ may be changed depending on a parameter related to a driver's operation input, or may be changed depending on a parameter related to a traveling state of the vehicle. With such a configuration, it is possible to accurately set an appropriate range of the difference mode target slip ratio $y_D$ according to, for example, the driver's operation input. Thus, it is possible to further improve controllability relating to a balance between a longitudinal force and a lateral force of the wheels. For example, it is possible to accurately set an appropriate range of the sum mode target slip ratio $y_S$ according to a traveling state of the vehicle 1. Thus, it is possible to further improve controllability relating to a balance between a longitudinal force and a lateral force of the wheels.

5. Others

The foregoing example is merely exemplary and is not intended to exclude the application of various modifications and techniques which are not explicitly described in the present embodiment. Each configuration according to the present embodiment can be modified in various ways without departing from the gist of the present embodiment. Each configuration according to the present embodiment can be selected as necessary or can be combined as appropriate.

In the above embodiment, the vehicle control device 10 applied to the rear wheel of the vehicle 1 has been exemplified. However, a similar vehicle control device may be applied to the front wheel, or a similar vehicle control device may be applied to both the front and rear wheels. At least in the vehicle 1 including the vehicle control device 10 that controls driving forces of the left drive system and the right drive system, it is possible to achieve the same effects as those of the above embodiment by performing the same control as that of the above embodiment.

In the above embodiment, the vehicle 1 on which the pair of motors 2 is mounted as the drive source has been exemplified. However, an internal combustion engine may be applied instead of the motor 2, and a specific type of the drive source is irrelevant. Although the vehicle 1 including the vehicle drive device (DM-AYC device) including the pair of motors 2 and the power distribution mechanism 3 has been exemplified, the present invention is also applicable to, for example, a vehicle without the power distribution mechanism 3 and an in-wheel motor vehicle. As long as a vehicle includes at least a left drive system including a left axle and a left wheel to which power is transmitted from a left drive source, and a right drive system including a right axle and a right wheel to which power is transmitted from a right drive source, the same control as that in the above embodiment can be performed, and the same operations and effects as those in the above embodiment can be obtained.

In implementing the vehicle control device according to the present invention, a driving force control method described in the following references can be referred to.

·Hiroshi Fujimoto, Takeshi Takano, Hidetoshi Nobumoto, and Toshimi Okazaki, "Driving Force Control Method Based on High Accuracy Slip Ratio Control", Mazda Technical Review, No. 32, pp. 228-233 (2015).
·Hiroshi Fujimoto, Junya Amada, and Takayuki Miyajima, "Development and Control of Electric Vehicle with Variable Drive Unit System", Proceedings of the 2013 JSAE Annual Spring Congress, No. 8-13, pp. 17-20 (2013).
·Masataka Yoshimura and Hiroshi Fujimoto, "Driving Torque Control Method for Electric Vehicle with In-Wheel Motors", IEEJ Transactions on Industry Applications (D), Vol. 131, No. 5, pp. 721-728 (2011).

[Industrial Applicability]

The present invention can be used in the manufacturing industry of a vehicle control device mounted on a vehicle, and can also be used in the manufacturing industry of a vehicle on which a vehicle control device is mounted.

[Reference Signs List]

| | |
|---|---|
| 1 | Vehicle |
| 2 | Motor |
| 3 | Power distribution mechanism |
| 4 | Axle |
| 4L | Left axle |
| 4R | Right axle |
| 5 | Left and right wheels |
| 5L | Left wheel |
| 5R | Right wheel |
| 6 | Inverter |
| 7 | Battery |
| 10 | Vehicle control device |
| 11 | Calculation unit |
| 12 | Limiting unit |
| 13 | Control unit |
| 14 | Accelerator opening sensor |
| 15 | Brake sensor |
| 16 | Steering angle sensor |
| 17 | Resolver |
| 18 | Wheel speed sensor |
| 21 | Slip setting unit |
| 22 | Sum mode control unit |
| 23 | Difference mode control unit |
| 24 | Left-right conversion unit |
| 31 | Sum difference calculation unit |
| 32 | Sum mode target slip ratio calculation unit |
| 33 | Difference mode target slip ratio calculation unit |
| 34 | Sum mode target slip ratio limiting unit |
| 35 | Difference mode target slip ratio limiting unit |
| 36 | Sum/difference wheel speed calculation unit |
| 37 | Multiplier |
| 38 | Multiplier |
| 39 | Upper and lower limit setting unit |
| 51 | Required driving force setting unit |
| 52 | Estimated driving force observer |
| 53 | Sum difference conversion unit |
| 54 | Damping control unit |
| 55 | Sum mode control unit |
| 56 | Difference mode control unit |
| 57 | Left-right conversion unit |
| M1 | Sum model |
| M2 | Difference model |
| $y_S$ | Sum mode target slip ratio |
| $y_D$ | Difference mode target slip ratio |

## Claims

1. A vehicle control device that controls driving forces of a left drive system and a right drive system in a vehicle including the left drive system including a left axle and a left wheel to which power is transmitted from a left drive source, and the right drive system including a right axle and a right wheel to which power is transmitted from a right drive source, the vehicle control device comprising:

   a sum model that is obtained by modeling motion states of the left drive system and the right drive system during straight traveling;

a difference model that is obtained by modeling motion states of the left drive system and the right drive system during turning;

a calculation unit that calculates a sum mode target slip ratio equivalent to a sum of target values of slip ratios of the left wheel and the right wheel and a difference mode target slip ratio equivalent to a difference between the target values of the slip ratios;

a limiting unit that limits the sum mode target slip ratio and the difference mode target slip ratio with an upper limit value and a lower limit value of each of the ratios; and

a control unit that controls the driving forces of the left drive system and the right drive system based on the sum mode target slip ratio and the difference mode target slip ratio which are limited by the limiting unit,

wherein the upper limit value and the lower limit value of the sum mode target slip ratio are variably set.

2. The vehicle control device according to claim 1, wherein
the upper limit value and the lower limit value of the sum mode target slip ratio are changed depending on a parameter related to a driver's operation input.

3. The vehicle control device according to claim 1, wherein
the upper limit value and the lower limit value of the sum mode target slip ratio are changed depending on a parameter related to a traveling state of the vehicle.

4. The vehicle control device according to claim 1, wherein
the upper limit value and the lower limit value of the difference mode target slip ratio are variably set.

5. The vehicle control device according to claim 4, wherein
the upper limit value and the lower limit value of the difference mode target slip ratio are changed depending on a parameter related to a driver's operation input.

6. The vehicle control device according to claim 4, wherein
the upper limit value and the lower limit value of the difference mode target slip ratio are changed depending on a parameter related to a traveling state of the vehicle.

7. A vehicle control method of controlling driving forces of a left drive system and a right drive system in a vehicle including the left drive system including a left axle and a left wheel to which power is transmitted from a left drive source and the right drive system including a right axle and a right wheel to which power is transmitted from a right drive source, the vehicle control method comprising:

preparing a sum model that is obtained by modeling motion states of the left drive system and the right drive system during straight traveling, and a difference model that is obtained by modeling motion states of the left drive system and the right drive system during turning;

calculating a sum mode target slip ratio equivalent to a sum of target values of slip ratios of the left wheel and the right wheel and a difference mode target slip ratio equivalent to a difference between the target values of the slip ratios;

limiting the sum mode target slip ratio and the difference mode target slip ratio with an upper limit value and a lower limit value of each of the ratios; and

controlling the driving forces of the left drive system and the right drive system based on the limited sum mode target slip ratio and difference mode target slip ratio,

wherein the upper limit value and the lower limit value of the sum mode target slip ratio are variably set.

# Fig. 1

# Fig. 2

# Fig. 3

## Fig. 4

# Fig. 5 A

Sum model (Two-inertia system model)

$\dot{\omega}_{Sds}$      $\dot{\omega}_{SL}$

$T_{Sds}$     $T_{Sds}$

$T_{Sin}$   $J_{SM}$     $J_{SL}$   $T_{SL}$

$K_S, D_S$

$$J_{SM} = G^2 \cdot J_M$$

# Fig. 5 B

Difference model (Two-inertia system model)

$\dot{\omega}_{Dds}$      $\dot{\omega}_{DL}$

$T_{Dds}$     $T_{Dds}$

$T_{Din}$   $J_{DM}$     $J_{DL}$   $T_{DL}$

$K_S, D_S$

$$J_{DM} = (2b+1)^2 \cdot G^2 \cdot J_M$$

EP 4 759 616 A1

# Fig. 6

# Fig. 7

21 ~ Slip setting unit

Total required torque
Accelerator opening
Steering angle
Vehicle speed

39 — Upper and lower limit setting unit

Left axle torque deviation

Right axle torque deviation

31 — Sum difference calculation unit

32 — Sum mode target slip ratio calculation unit $y_S$

33 — Difference mode target slip ratio calculation unit $y_D$

Calculation unit

11

34 — Sum mode target slip ratio limiting unit

35 — Difference mode target slip ratio limiting unit

Limiting unit

12

37 — × — Sum mode target wheel speed

38 — × — Difference mode target wheel speed

Left axle reference wheel speed

Right axle reference wheel speed

36 — Sum/difference wheel speed calculation unit

## Fig. 8 A

Sum mode target slip ratio $y_S$

- $y_2$
- $y_1$
- 0
- $T_1$
- $T_2$
- Total required torque
- $-y_1$
- $-y_2$

Upper limit
Lower limit

## Fig. 8 B

Difference mode target slip ratio $y_D$

- $y_3$
- $-T_4$
- $-T_3$
- 0
- $T_3$
- $T_4$
- Steering angle
- $-y_3$

Upper limit
Lower limit

# Fig. 9 A

# Fig. 9 B

## INTERNATIONAL SEARCH REPORT

| International application No. |
|---|
| **PCT/JP2024/027745** |

**A. CLASSIFICATION OF SUBJECT MATTER**

*B60L 15/20*(2006.01)i; *B60W 30/00*(2006.01)i
FI: B60L15/20 S; B60W30/00

According to International Patent Classification (IPC) or to both national classification and IPC

**B. FIELDS SEARCHED**

Minimum documentation searched (classification system followed by classification symbols)

B60L15/20; B60W30/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2023/013565 A1 (MITSUBISHI JIDOSHA KOGYO KABUSHIKI KAISHA) 09 February 2023 (2023-02-09)<br>entire text | 1-7 |
| A | JP 2022-135719 A (TOYOTA JIDOSHA KABUSHIKI KAISHA) 15 September 2022 (2022-09-15)<br>entire text | 1-7 |
| A | WO 2016/125686 A1 (NTN CORPORATION) 11 August 2016 (2016-08-11)<br>entire text | 1-7 |
| A | JP 2011-251579 A (MUTO, Nobuyoshi) 15 December 2011 (2011-12-15)<br>entire text | 1-7 |
| A | JP 5-133249 A (NISSAN MOTOR CO., LTD.) 28 May 1993 (1993-05-28)<br>entire text | 1-7 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 October 2024** | **22 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
| --- |
| **PCT/JP2024/027745** |

### C. DOCUMENTS CONSIDERED TO BE RELEVANT

| Category* | Citation of document, with indication, where appropriate, of the relevant passages | Relevant to claim No. |
| --- | --- | --- |
| A | JP 5333343 B2 (MITSUBISHI JIDOSHA KOGYO KABUSHIKI KAISHA) 06 November 2013 (2013-11-06)<br>entire text | 1-7 |

Form PCT/ISA/210 (second sheet) (July 2022)

**INTERNATIONAL SEARCH REPORT**
Information on patent family members

International application No.

**PCT/JP2024/027745**

| Patent document cited in search report | | | Publication date (day/month/year) | Patent family member(s) | | | Publication date (day/month/year) |
|---|---|---|---|---|---|---|---|
| WO | 2023/013565 | A1 | 09 February 2023 | EP | 4382346 | A1 | |
| | | | | entire text | | | |
| | | | | CN | 117677528 | A | |
| JP | 2022-135719 | A | 15 September 2022 | US | 2022/0281472 | A1 | |
| | | | | entire text | | | |
| | | | | CN | 115092111 | A | |
| WO | 2016/125686 | A1 | 11 August 2016 | JP | 2016-146731 | A | |
| JP | 2011-251579 | A | 15 December 2011 | WO | 2011/151936 | A1 | |
| JP | 5-133249 | A | 28 May 1993 | (Family: none) | | | |
| JP | 5333343 | B2 | 06 November 2013 | US | 2011/0281684 | A1 | |
| | | | | entire text | | | |
| | | | | EP | 2386782 | A2 | |
| | | | | CN | 102322508 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019103249 A

- WO 2023013565 A1

### Non-patent literature cited in the description

- **HIROSHI FUJIMOTO** ; **TAKESHI TAKANO** ; **HIDETOSHI NOBUMOTO** ; **TOSHIMI OKAZAKI**. Driving Force Control Method Based on High Accuracy Slip Ratio Control. *Mazda Technical Review*, 2015 (32), 228-233

- **HIROSHI FUJIMOTO** ; **JUNYA AMADA** ; **TAKAYUKI MIYAJIMA**. Development and Control of Electric Vehicle with Variable Drive Unit System. *Proceedings of the 2013 JSAE Annual Spring Congress*, 2013 (8-13), 17-20
- **MASATAKA YOSHIMURA** ; **HIROSHI FUJIMOTO**. Driving Torque Control Method for Electric Vehicle with In-Wheel Motors. *IEEJ Transactions on Industry Applications (D)*, 2011, vol. 131 (5), 721-728